(19) 

Europäisches
Patentamt
European
Patent Office
Office européen
des brevets

(11) **EP 4 571 786 A1**

(12) **EUROPEAN PATENT APPLICATION**
published in accordance with Art. 153(4) EPC

(43) Date of publication:
**18.06.2025 Bulletin 2025/25**

(21) Application number: **23865407.3**

(22) Date of filing: **07.09.2023**

(51) International Patent Classification (IPC):
**H01B 1/06** (2006.01)     **C01B 25/45** (2006.01)
**C01G 25/00** (2006.01)     **H01M 10/0562** (2010.01)

(52) Cooperative Patent Classification (CPC):
**C01B 25/45; C01G 25/00; H01B 1/06;**
**H01M 10/0562;** Y02E 60/10

(86) International application number:
**PCT/JP2023/032723**

(87) International publication number:
**WO 2024/058052 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.09.2022 JP 2022144851**

(71) Applicants:
• **Sumitomo Chemical Company, Limited
Tokyo 103-6020 (JP)**

• **Kyoto University
Kyoto-shi, Kyoto 606-8501 (JP)**

(72) Inventors:
• **DOI Atsunori
Tsukuba-shi, Ibaraki 300-3294 (JP)**
• **YAMABAYASHI Tsutomu
Niihama-shi, Ehime 792-8521 (JP)**
• **KAGEYAMA Hiroshi
Kyoto-shi, Kyoto 606-8501 (JP)**

(74) Representative: **Vossius & Partner
Patentanwälte Rechtsanwälte mbB
Siebertstrasse 3
81675 München (DE)**

(54) **ION CONDUCTIVE SUBSTANCE, ELECTROLYTE, AND BATTERY**

(57)     An ion conductive substance includes: an alkali metal element; a tetravalent metal element M; a halogen element; a dopant element X; and an oxygen element, in which a content of the dopant element X is 50% by mol or less with respect to a content of the metal element M, and in an X-ray diffraction chart obtained from measurement using a CuKα radiation at 25°C, the ion conductive substance has a diffraction peak having a half-value width of 2.0° to 10° within a range of 2θ angle of 10° to 20°.

*Fig.1*

## Description

### Technical Field

The present disclosure relates to an ion conductive substance, an electrolyte, and a battery.

### Background Art

In recent years, solid electrolytes have attracted attention as electrolytes used in electrochemical devices such as lithium ion batteries (Patent Literatures 1 to 4). Since the solid electrolytes are excellent in high-temperature resistance, high voltage resistance, and the like as compared to conventional electrolytic solutions, it is considered that the solid electrolytes are useful for improving battery performance such as safety, high capacity, rapid charging and discharging, and pack energy density.

As described in Literatures 1 to 4, halide solid electrolytes containing lithium and metal elements other than lithium are known as materials used for solid electrolytes of lithium ion batteries. A halide solid electrolyte does not require sintering because of high flexibility, has high safety because of not releasing harmful substances such as $H_2S$, and the like, which are advantages not found in oxide-based or sulfide-based solid electrolytes.

### Citation List

### Patent Literature

Patent Literature 1: WO 2021002064 A
Patent Literature 2: WO 2021024785 A
Patent Literature 3: WO 2021220577 A
Patent Literature 4: Japanese Patent No. 6947321

## Summary of Invention

### Technical Problem

However, the halide solid electrolyte has room for improvement in ionic conductivity.

The present disclosure has been made in view of the above circumstances, and an object of the present disclosure is to provide an ion conductive substance having excellent ionic conductivity, and an electrolyte and a battery using the same.

### Solution to Problem

The present disclosure includes the following embodiments [1] to [6].

[1] An ion conductive substance containing: an alkali metal element; a tetravalent metal element M; a halogen element; a dopant element X; and an oxygen element, in which a content of the dopant element X is 50% by mol or less with respect to a content of the tetravalent metal element M, and in an X-ray diffraction chart obtained from measurement using a CuK$\alpha$ radiation at 25°C, the ion conductive substance has a diffraction peak having a half-value width of 2.0° to 10° within a range of $2\theta$ angle of 10° to 20°.

[2] An ion conductive substance containing: an amorphous phase; crystallites dispersed in the amorphous phase; an alkali metal element; a tetravalent metal element M; a halogen element; a dopant element X; and an oxygen element, in which an average circle equivalent diameter of the crystallites is 20 nm or less.

[3] The ion conductive substance according to [1] or [2], in which the dopant element is at least one of P or S.

[4] The ion conductive substance according to any one of [1] to [3], in which a content of the alkali metal element is 20% to 30% by mol, the content of the tetravalent metal element M is 5% to 20% by mol, a content of the halogen element is 40% to 60% by mol, and the content of the dopant element X is 0.05% to 5% by mol, with respect to a total amount of atoms contained in the ion conductive substance.

[5] An electrolyte containing the ion conductive substance according to any one of [1] to [4].

[6] A battery containing the electrolyte according to [5].

**Advantageous Effects of Invention**

According to the present disclosure, it is possible to provide the ion conductive substance having excellent ionic conductivity, and the electrolyte and the battery using the same.

**Brief Description of Drawings**

FIG. 1 is a diagram illustrating an X-ray diffraction chart obtained in Examples 1 to 6 and Comparative Examples 1 to 3.
FIG. 2 is a graph illustrating Arrhenius plots obtained for ion conductive substances of Examples 3, 5, and 6 and Comparative Examples 1 to 3.
FIG. 3 is a TEM image of the ion conductive substance of Example 3.
FIG. 4 is a graph illustrating results of cyclic voltammetry in Examples 1 to 5 and Comparative Example 1.
FIG. 5 is a graph illustrating the result of a charge and discharge test of Example 1.

**Description of Embodiments**

An ion conductive substance (alkali metal element-containing halide) of the present embodiment contains an alkali metal element, a tetravalent metal element M (also referred to as an element M), a halogen element, a dopant element X, and an oxygen element, and satisfies at least one of the following (1) or (2):

(1) a content of the dopant element X is 50% by mol or less with respect to a content of the metal element M, and in an X-ray diffraction chart obtained from measurement using a CuKα radiation at 25°C, the ion conductive substance has a diffraction peak having a half-value width of 2.0° to 10° within a range of 2θ angle of 10° to 20°; and
(2) the ion conductive substance contains an amorphous phase and crystallites dispersed in the amorphous phase, and an average particle diameter of the crystallites is 20 nm or less.

Regarding (1), the half-value width of the diffraction peak may be 4.0° to 9.0°, 4.5° to 8.8°, or 5.0° to 8.7°. Note that, in the present specification, the half-value width means a full width at half maximum (FWHM) unless otherwise specified.
In a case where (2) is satisfied, it can be said that the ion conductive substance has a sea-island structure. The average particle diameter of the crystallites may be 15 nm or less, 10 nm or less, or 6 nm or less. In addition, the thickness may be 1 nm or more, or 2 nm or more. The average particle diameter of the crystallites may be, for example, an average value of equivalent circle diameters calculated from the area of the crystallites in a microscopic image obtained by a transmission electron microscope. The average may be an average for all crystals recognized with a method described in Examples within the field of view (for example, 188.6 nm × 188.6 nm).
The alkali metal element contained in the ion conductive substance of the present embodiment may be any of Li, Na, K, Rb, or Cs, and the ion conductive substance may contain at least one of Li, Na, or K, may contain at least one of Li or Na, or may contain Li.
Among the alkali metal elements contained in the ion conductive substance, the proportion of one alkali metal element may be 80% by mol or more, 90% by mol or more, or 95% by mol or more. The one alkali metal element may be at least one of Li, Na, or K, may be at least one of Li or Na, or may be Li.
A content of the alkali metal element in the ion conductive substance may be 20% to 30% by mol, 22% to 28% by mol, or 24% to 27% by mol with respect to the total amount of atoms contained in the ion conductive substance.
Examples of the element M include Zr, Ti, and Hf. The element M may include at least one of Zr or Hf, or may include Zr. The ion conductive substance may contain one or more tetravalent metal elements M. A content of the tetravalent metal in the ion conductive substance may be 5% to 20% by mol, 8% to 16% by mol, 8% to 15% by mol, or 9% to 13% by mol with respect to the total amount of atoms contained in the ion conductive substance. The element M may include Zr and Hf. Among the tetravalent metal elements contained in the ion conductive substance, a content of Zr may be 70% by mol or more, 80% by mol or more, 85% by mol or more, or 90% by mol or more. Among the tetravalent metal elements contained in the ion conductive substance, a content of Zr may be 99.9% by mol or less, 99% by mol or less, 98% by mol or less, 97% by mol or less, or 95% by mol or less.
The ion conductive substance may contain a metal element M2 other than the tetravalent metal element (except for an alkali metal element). The metal element M2 may be at least one of a divalent, trivalent, or pentavalent metal element. Examples of the divalent metal include an alkaline earth metal and Zn. Examples of the trivalent metal element include Sc, La, Ce, Pr, Nd, Pm, Sm, Eu, Gd, Tb, Dy, Ho, Er, Yb, Lu, Y, Al, Ga, In, Bi, and Sb. Examples of the pentavalent metal element include Nb and Ta. The alkaline earth metal may be at least one of Mg, Ca, Sr, or Ba, may be at least one of Mg or Ca, or may be Mg. A content of M2 may be 30% by mol or less, 20% by mol or less, 15% by mol or less, or 10% by mol or less, with respect to the total amount of metal elements (the total amount of the element M and the element M2) other than the alkali metals contained in the ion conductive substance. The content of M2 may be 0.1% by mol or more, 1% by mol or more, 2% by mol or more, 2% by mol or more, 3% by mol or more, or 5% by mol or more, with respect to the total amount of the divalent to tetravalent metal elements contained in the ion conductive substance.

The halogen element contained in the ion conductive substance of the present embodiment may be any of F, Cl, Br, or I, and may include at least one of Cl, Br, or I, may include at least one of Cl or Br, or may include Cl. The ion conductive substance may contain only one halogen element, or may contain two or more halogen elements.

A content of the halogen element in the ion conductive substance may be 40% to 60% by mol, 43% to 55% by mol, or 45% to 52% by mol with respect to the total amount of atoms contained in the ion conductive substance.

The dopant element X contained in the ion conductive substance of the present embodiment may be an element capable of forming a tetrahedral structure $XO_4$ with four oxygen atoms, and may be at least one of P or S. The dopant element X may include P. The dopant element X may also include S.

A content of the dopant element X in the ion conductive substance may be 0.05% to 5% by mol, 0.1% to 3% by mol, 0.2% to 2% by mol, or 0.3% to 1% by mol with respect to the total amount of atoms contained in the ion conductive substance.

The content of the dopant element X in the ion conductive substance may be 50% by mol or less, 1% to 30% by mol, 1% to 20% by mol, or 2% to 10% by mol of the content of the tetravalent metal element M. The content of the dopant element X in the ion conductive substance may be 20% by mol or less, 15% by mol or less, 10% by mol or less, or 8% by mol or less of the content of the tetravalent metal element M.

The content of the dopant element X in the ion conductive substance may be 1% to 10% by mol or 2% to 6% by mol of the content of the oxygen element.

A content of the oxygen element in the ion conductive substance may be 5% to 20% by mol, 8% to 18% by mol, or 10% to 16% by mol with respect to the total amount of atoms contained in the ion conductive substance.

The ion conductive substance of the present embodiment may contain a compound represented by the following Composition Formula (1) (also referred to as an alkali metal element-containing halide).

$$A_\alpha M_\beta X_\gamma Z_\delta E_\eta O_\varepsilon \cdots \qquad (1)$$

(In the formula, A is an alkali metal element, M is the above-described tetravalent metal element M, X is the above-described dopant element X, and Z is a halogen element, and $1.5 \le \alpha \le 3$, $0.5 \le \beta \le 2$, $0.005 \le \gamma \le 0.5$, $3 \le \delta \le 6$, and $0.5 \le \varepsilon \le 2$ are satisfied.)

a may be $1.8 \le \alpha \le 2.5$, $1.9 \le \alpha \le 2.3$, or $1.95 \le \alpha \le 2.2$. Any combination of the upper limit and lower limit for $\alpha$ can be adopted.

$\beta$ may be $0.7 \le \beta \le 1.4$, $0.8 \le \beta \le 1.2$, or $0.9 \le \beta \le 1.1$. Any combination of the upper limit and lower limit for $\beta$ can be adopted.

y may be $0.01 \le \gamma \le 0.2$, $0.02 \le \gamma \le 0.15$, or $0.025 \le y \le 0.10$. Any combination of the upper limit and lower limit for $\gamma$ can be adopted.

$\delta$ may be $3.5 \le \delta \le 5$, $3.7 \le \delta \le 4.3$, or $3.8 \le \delta \le 4.1$. Any combination of the upper limit and lower limit for $\delta$ can be adopted.

$\varepsilon$ may be $0.7 \le \varepsilon \le 1.5$, $0.8 \le \varepsilon \le 1.3$, or $0.9 \le \varepsilon \le 1.2$. Any combination of the upper limit and lower limit for $\varepsilon$ can be adopted.

E is an element other than A, M, X, Z, and O, and may be an element added or mixed other than necessary elements. Examples of E include C, B, and N. $\eta$ may be 0 to 0.1, 0 to 0.01, 0 to 0.001, or substantially 0.

In addition, the ion conductive substance of the present embodiment may contain a compound represented by the following Composition Formula (2) (also referred to as an alkali metal element-containing halide).

$$A_\alpha M_\beta M^2_\xi X_\gamma Z_\delta E_\eta O_\varepsilon . \qquad (2)$$

(In the formula, A is an alkali metal element, M is the above-described tetravalent metal element M, $M^2$ is a metal element $M^2$ other than the above-described tetravalent metal element $M^2$ (except for an alkali metal element), X is the above-described dopant element X, and Z is a halogen element.)

Preferred respective ranges of $\alpha$, $\beta$, $\gamma$, $\delta$, and $\varepsilon$ in Formula (2) may be ranges similar to those exemplified as the ranges of $\alpha$, $\beta$, $\gamma$, $\delta$, and $\varepsilon$ in Formula (1).

$\zeta$ may be $0.01 \le \zeta \le 0.3$, $0.03 \le \zeta \le 0.2$, or $0.05 \le \zeta \le 0.15$. Any combination of the upper limit and lower limit for $\zeta$ can be adopted.

E is an element of an element other than A, M, $M^2$, X, Z, and O, and may be an element added or mixed other than necessary elements. Examples of E include C, B, and N. $\eta$ may be 0 to 0.1, 0 to 0.01, 0 to 0.001, or substantially 0.

The activation energy of the ion conductive substance of the present embodiment may be 0.35 eV or less, 0.33 eV or less, or 0.23 to 0.35 eV. The activation energy of the ion conductive substance can be determined by measuring an ionic conductivity σ at five temperatures (25°C, 40°C, 60°C, 80°C, and 100°C) within a temperature range of 25°C to 100°C and carrying out curve fitting based on the following calculation formula.

$$\text{Formula: } \sigma T = A\exp(-E_a/k_b T)$$

In the formula, σ represents ionic conductivity (S/cm), T represents absolute temperature (K), A represents a frequency factor, $E_a$ represents activation energy, and $k_b$ represents Boltzmann's constant.
In addition, a graph (Arrhenius plot) with σ on the vertical axis and 1000/T (T being the absolute temperature) on the horizontal axis can be created.
A method for producing the ion conductive substance of the present embodiment is not particularly limited, and examples thereof include a production method including a step of performing ball milling on a raw material.
The raw material is not particularly limited. Examples of an alkali metal source include alkali metal halides and oxides of alkali metals. Examples of a metal element M source include halides of the metal element M. Examples of a metal element M2 source include halides of the metal element M2. The dopant element X source may be a compound such as a salt composed of an $XO_4$ ion and an alkali metal. It is preferable to mix the raw materials before performing the ball milling, and it is more preferable to mix the raw materials under an inert atmosphere (for example, Ar atmosphere).
The conditions of the ball milling are not particularly limited, and can be set to 10 to 100 hours at a rotation speed of 200 to 700 rpm. The grinding time may be 1 hour to 72 hours, may be 12 to 60 hours, or may be 20 to 60 hours.
The balls used to perform the ball milling are not particularly limited, and zirconia balls can be used. The size of the balls used is not particularly limited, and balls of 2 mm to 10 mm can be used.
The raw materials are sufficiently mixed by performing the ball milling for the above-described time, and the mechanochemical reaction is promoted, so that the ionic conductivity of the obtained compound can be improved.
It is preferable that annealing is not performed on a product (ion conductive substance) obtained by performing the ball milling. In a case where the annealing is performed, crystallites grow and become coarse, and the above-described effect may not be obtained. Examples of the annealing include heating the ball-milled product at 100°C or higher, 150°C or higher, or 200°C or higher.
The ion conductive substance of the present embodiment can be used, for example, as a material for electrochemical devices such as capacitors and batteries. Examples of such a material include a material of an electrolyte (solid electrolyte). Examples of the battery include batteries such as a lithium ion battery and a sodium ion battery, which are charged and discharged by movement of alkali metal ions between a positive electrode and a negative electrode. In addition, the ion conductive substance of the present embodiment may be contained in a positive electrode or a negative electrode of a battery.
Hereinafter, the battery of the present embodiment will be described using a lithium ion battery as an example. The lithium ion battery includes a positive electrode, a negative electrode, and an electrolyte (solid electrolyte) disposed between the positive electrode and the negative electrode. The ion conductive substance (alkali metal element-containing halide (in this case, lithium-containing halide)) of the present embodiment may be contained in the electrolyte of the lithium ion battery.
The positive electrode of the lithium ion battery is not particularly limited and contains a positive electrode active material, and may contain a conductive additive, a binder, and the like as necessary.
The positive electrode may have a configuration in which a layer that contains these materials is formed on a current collector. Examples of the positive electrode active material include a lithium-containing composite metal oxide containing lithium (Li) and at least one transition metal selected from the group consisting of V, Cr, Mn, Fe, Co, Ni, and Cu. Examples of such a lithium composite metal oxide include $LiCoO_2$, $LiNiO_2$, $LiMn_2O_4$, $Li_2MnO_3$, $LiNi_xMn_yCo_{1-x-y}O_2$ [0 < x + y < 1]), $LiNi_xCo_yAl_{1-x-y}O_2$ [0 < x + y < 1]), $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$.
The negative electrode of the lithium ion battery is not particularly limited and contains a negative electrode active material, and may contain a conductive additive, a binder, and the like as necessary. Examples thereof include single elements such as Li, Si, P, Sn, Si-Mn, Si-Co, Si-Ni, In, and Au, as well as alloys or composites containing these elements, carbon materials such as graphite, and substances in which lithium ions are intercalated between layers of the carbon materials.
The material of the current collector is not particularly limited, and may be a single metal element such as Cu, Mg, Ti, Fe, Co, Ni, Zn, Al, Ge, In, Au, Pt, Ag, or Pd, or an alloy.
A solid electrolyte layer may include a plurality of layers. For example, in addition to the solid electrolyte layer containing the ion conductive substance of the present embodiment, a sulfide solid electrolyte layer may be included. The sulfide solid electrolyte layer may be included between the solid electrolyte containing the ion conductive substance of the present embodiment and the negative electrode. The sulfide solid electrolyte is not particularly limited, and examples thereof include $Li_6PS_5Cl$, $Li_2S$-$PS_5$, $Li_{10}GeP_2S_{12}$, $Li_{9.6}P_3S_{12}$, $Li_{9.54}Si_{1.74}P_{1.44}S_{11.7}Cl_{0.3}$, and $Li_3PS_4$.

**Examples**

(Example 1)

· Ball milling

In an argon atmosphere having a dew point of -70°C or lower (hereinafter, referred to as a dry argon atmosphere), 0.1334 g of $Li_2O$, 1.0407 g of $ZrCl_4$, 0.0259 g of $Li_3PO_4$ were weighed to prepare a raw material.
The above-described raw material was put in a zirconia pot having a volume of 50 ml for the following planetary ball mill, and 65 g of zirconia balls having a diameter of 4 mm were put therein. An ion conductive substance of Example 1 was obtained by performing a treatment to cause a mechanochemical reaction under the conditions of 24 hours and 300 rpm.
The ball mill was operated in a mode in which the ball mill rotates for 10 minutes, followed by a 1-minute stop as an interval, and the rotation direction is alternately switched between clockwise and counterclockwise. The starting composition of the obtained ion conductive substance (lithium-containing chloride) was $Li_{2.15}ZrCl_4O(PO_4)_{0.05}$.
Planetary ball mill machine: PM 400 manufactured by Verder Scientific GmbH & Co. KG

(Example 2)

An ion conductive substance was produced in the same manner as in Example 1 except that the ball milling was performed for 48 hours.

(Example 3)

An ion conductive substance was produced in the same manner as in Example 1 except that the mixing ratio of the raw materials was changed to obtain the starting compositions illustrated in Table 2.

(Example 4)

An ion conductive substance was produced in the same manner as in Example 1 except that $Li_2SO_4$ was used instead of $Li_3PO_4$, and the mixing ratio of the raw materials was changed to obtain the starting compositions illustrated in Table 2.

(Example 5)

An ion conductive substance was produced in the same manner as in Example 1 except that $Li_2O$, $ZrCl_4$, $HfCl_4$, and $Li_3PO_4$ were used as raw materials, and the mixing ratio of the raw materials was changed to obtain the starting compositions illustrated in Table 2.

(Example 6)

An ion conductive substance was produced in the same manner as in Example 1 except that $Li_2O$, $ZrCl_4$, $MgCl_2$, and $Li_3PO_4$ were used as raw materials, and the mixing ratio of the raw materials was changed to obtain the starting compositions illustrated in Table 2.

(Example 7)

An ion conductive substance was produced in the same manner as in Example 1 except that $Li_2O$, $ZrCl_4$, $MgCl_2$, and $Li_3PO_4$ were used as raw materials, and the mixing ratio of the raw materials was changed to obtain the starting compositions illustrated in Table 2.

(Comparative Example 1)

An ion conductive substance was produced in the same manner as in Example 1 except that $LiCl$ and $ZrCl_4$ were used as raw materials, and the mixing ratio of the raw materials was changed to obtain the starting compositions illustrated in Table 2.

(Comparative Example 2)

An ion conductive substance was produced in the same manner as in Example 1 except that LiCl, $Li_2O$, and $ZrCl_4$ were used as raw materials, and the mixing ratio of the raw materials was changed to obtain the starting compositions illustrated in Table 2.

(Comparative Example 3)

An ion conductive substance was produced in the same manner as in Example 1 except that $Li_2O$ and $ZrCl_4$ were used as raw materials, and the product obtained by ball milling the raw materials with the mixing ratio adjusted to obtain the starting compositions in Table 2 was annealed at 200°C for 5 hours.

(Comparative Example 4)

An ion conductive substance was produced in the same manner as in Example 1 except that $Li_2SO_4$ was used instead of $Li_3PO_4$, and the mixing ratio of the raw materials was changed to obtain the starting compositions illustrated in Table 2.

<Powder X-Ray Diffraction>

For the obtained ion conductive substance, a diffraction peak observed within a range of 10° to 20° at $2\theta$ was evaluated by the powder X-ray diffraction measurement at 25°C. The results are illustrated in Table 2. The powder X-ray diffraction measurement was performed under the following measurement conditions.

Measuring apparatus: Ultima IV (manufactured by Rigaku Holdings Corporation)
X-ray generator: $CuK\alpha$ radiation source, voltage 40 kV, current 40 mA
X-ray detector: Scintillation counter or semiconductor detector
Measurement range: Diffraction angle $2\theta = 5°$ to 80°
Scan speed: 4°/min

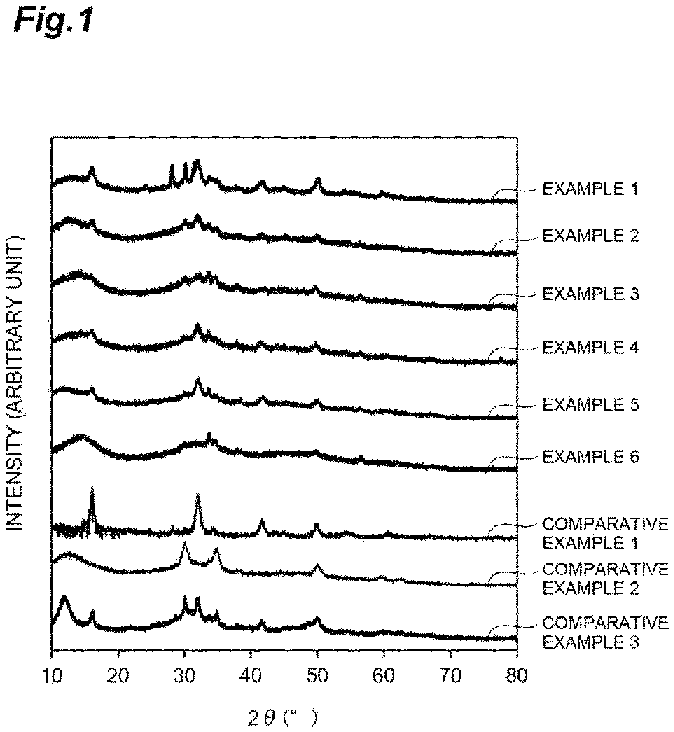

FIG. 1 is a diagram illustrating an X-ray diffraction chart obtained for the ion conductive substances in Examples 1 to 6 and Comparative Examples 1 to 3.
A half-value width of a peak was determined by removing the background signal and performing fitting.

<Evaluation of Ionic Conductivity>

A press molding die including a frame, a punch lower part, and a punch upper part were prepared. The frame was formed of insulating polycarbonate. In addition, both the punch upper part and the punch lower part were formed of electron-conductive stainless steel, and were electrically connected to terminals of an impedance analyzer (SI 1260 manufactured by Solatron Analytical).
The ionic conductivity of the ion conductive substance was measured by the following method using the press molding die. First, filling of an ion conductive substance onto the punch lower part inserted vertically downward into a hollow section of the frame was performed in a dry argon atmosphere. Then, the punch upper part was pressed toward the hollow section of the frame from above to apply a pressure of 370 MPa to the ion conductive substance powder inside the press molding die. After the pressure was applied, a punch was fastened and fixed vertically with a jig, and the impedance of the ion conductive substance was measured by an electrochemical impedance measurement method using the impedance analyzer with a constant pressure maintained.
From the impedance measurement results, a graph of a Cole-Cole plot was created. In the Cole-Cole plot, the real part of the impedance at the measurement point where the absolute value of the phase of the complex impedance is the smallest was regarded as a resistance value to ion conduction of the ion conductive substance. The resistance value was used to calculate the ionic conductivity based on the following Formula (III). The results are illustrated in Table 2.

$$\sigma = (R_{SE} \times S/t)^{-1} \quad \cdots \quad (III)$$

In the formula,

σ is an ionic conductivity,

S is a contact area of the ion conductive substance with the punch upper part (equal to the cross-sectional area of the hollow section of the frame),

$R_{SE}$ is a resistance value of the solid electrolyte material in impedance measurement, and

t is a thickness of the ion conductive substance when pressure is applied.

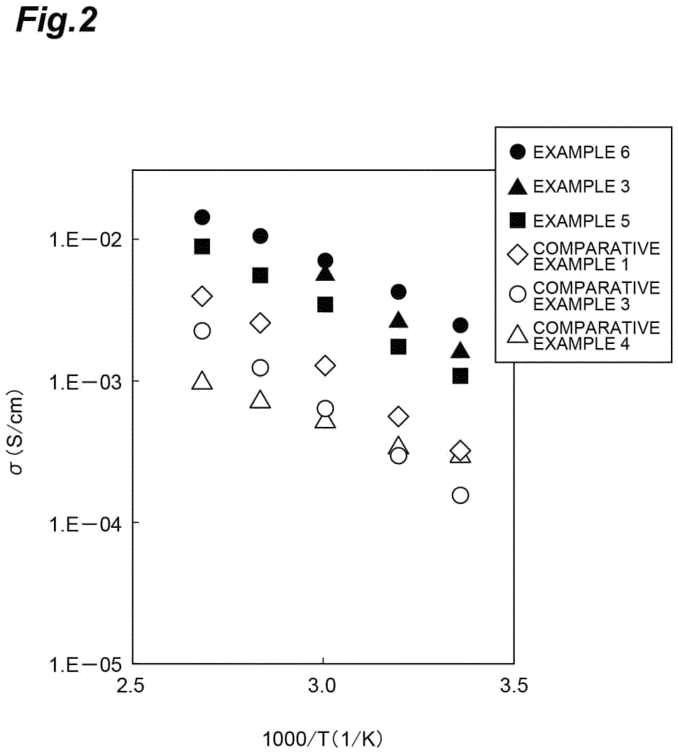

The ionic conductivity at 25°C was measured. An ionic conductivity was measured at five temperatures (25°C, 40°C, 60°C, 80°C, and 100°C) within a temperature range of 25°C to 100°C. The results are illustrated in Table 2. The ionic conductivity at each of the five temperatures is represented by $\sigma_T$ (T = 25°C, 40°C, 60°C, 80°C, or 100°C). FIG. 2 is a graph illustrating Arrhenius plots obtained for ion conductive substances of Examples 3, 5, and 6 and Comparative Examples 1 to 3. In FIG. 2, two points having the smallest value of 1000/T in Example 6 and two points having the smallest value of 1000/T in Example 3 were almost overlapped.

<Microstructure Observation by Transmission Electron Microscope>

Apparatus: Analytical electron microscope ARM200F, manufactured by JEOL Ltd.

Measurement conditions: Acceleration voltage 200 kV

Sample adjustment: Processing in an inert atmosphere while performing cooling with a cryostat by a focused ion beam (FIB)

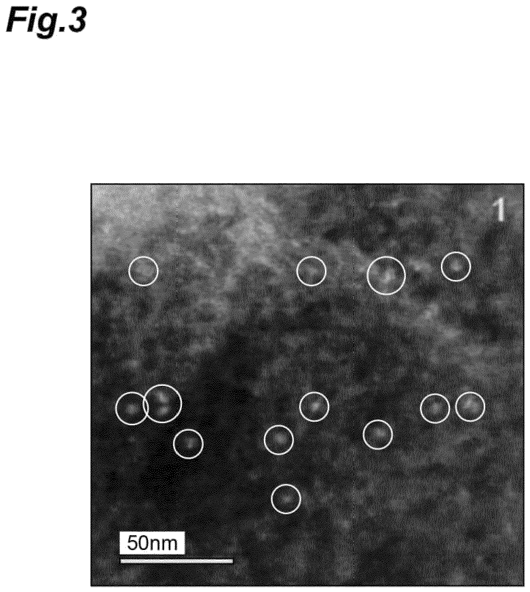

FIG. 3 is a TEM image of the ion conductive substance of Example 3. As illustrated in FIG. 3, it was found that a sea-island structure in which island structures were crystal phases and a sea structure of an amorphous phase was formed to surround the island structures was formed. Here, in an electron diffraction pattern that is obtained by transmission electron microscopic observation, an image of crystals for which diffraction spots are present in the aperture of a limited visual field is formed, whereby an image of crystals corresponding to specific diffraction spots can be formed brighter than an ambient amorphous phase in the real space. Therefore, the distribution of crystal phases in the real space is found. In FIG. 3, white circled portions are crystal phases.

In FIG. 3, coloring was performed so that the brightly-formed images of the portions became clear, and each crystal phase was numbered. The spatial distribution of the crystal phases was investigated as described above.

In addition, regarding the crystal phases, as a result of analyzing a total of 51 crystal grains in the field of view illustrated in the figure, the average circle equivalent diameter of the crystal phases was 4.5 nm.

<Preparation of Cell for Cyclic Voltammetry>

As described below, a cell for cyclic voltammetry was prepared. The cell for cyclic voltammetry was prepared in a glove box purged with an inert gas.

First, the ion conductive substance of Example 1 was put into an insulating tube having a diameter of 10 mm. A pressure of 370 MPa was applied to the ion conductive substance, and a solid electrolyte layer (a layer of the ion conductive substance) was formed.

Next, 60 mg of an In foil was disposed to come into contact with and cover the solid electrolyte layer, and furthermore, 2 mg of a Li foil was disposed to come into contact with the In foil, thereby obtaining a laminate. A pressure of 370 MPa was applied to the laminate, and a reference electrode made of a Li-In alloy was formed on the solid electrolyte layer.

Furthermore, a disc-like plate that was made of stainless steel and has a diameter of 10 mm and a thickness of 0.1 mm was disposed to come into contact with and cover a first solid electrolyte layer to obtain a laminate. A pressure of 370 MPa was applied to the obtained laminate, and a working electrode made of stainless steel was formed on the solid electrolyte layer.

Current collectors formed of stainless steel were attached to the reference electrode and the working electrode, and lead wires were then attached to the current collectors. All of the members were disposed in a desiccator sealed in the glove box. The cell for cyclic voltammetry was obtained as described above.

<Cyclic Voltammetry Test>

The reference electrode and the working electrode were electrically connected to an impedance analyzer SI1260 and a potentiostat SI1287A, and a cyclic voltammetry test was performed on the cell for cyclic voltammetry under the following conditions.

That is, in the cyclic voltammetry test, the sweep rate was set to 1 mV/s, and the value of a current that flowed when the potential of the working electrode was changed with respect to the reference electrode ($Li^+$/Li-In) was measured.

First, the potential of the working electrode with respect to the reference electrode was increased up to 5.5 V from an open-circuit voltage as a starting point, then, turned over and decreased to 0 V.

The cyclic voltammetry test was performed at room temperature (25°C). The potential at which a reduction current of 0.5 $\mu$A or more was observed was measured and used as an index of electrochemical stability. The results are illustrated in Table 2.

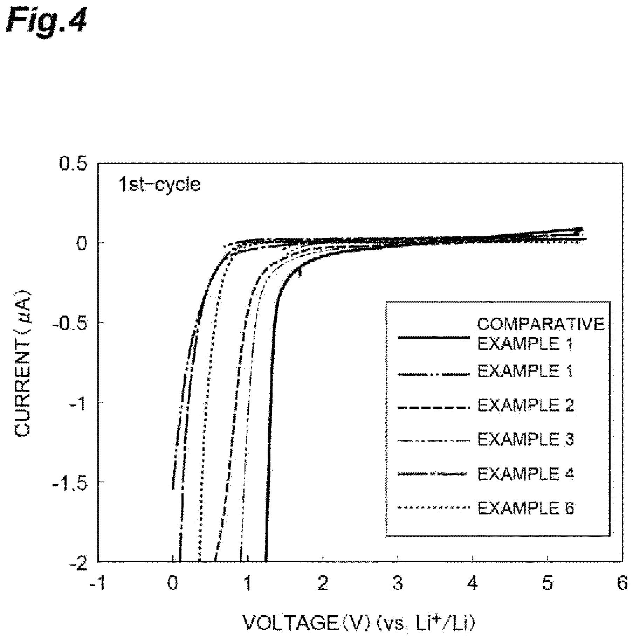

FIG. 4 is a graph illustrating results of cyclic voltammetry in Examples 1 to 5 and Comparative Example 1. As compared to Comparative Example 1, it can be said that the ion conductive substances of Examples 1 and 2 have an expanded potential window on the low potential side, and have improved stability.

In a dry argon atmosphere, an ion conductive substance of Example 6, $LiNi_{1/3}Mn_{1/3}Co_{1/3}O_2$, and acetylene black were weighed as 29 parts by mass, 67 parts by mass, and 4 parts by mass respectively, and mixed in a mortar to obtain a mixture.

In an insulating cylinder having an inner diameter of 10 mm, 100 mg of the ion conductive substance of Example 1 and 15 mg of the above-described mixture were sequentially laminated to obtain a laminate. A pressure of 370 MPa was applied to the laminate to form a first electrode (the layer of the mixture) and a first solid electrolyte layer (the layer of the ion conductive substance).

Next, 60 mg of a sulfide solid electrolyte $Li_6PS_5Cl$ was put so as to come into contact with the first solid electrolyte layer to obtain a laminate. A pressure of 370 MPa was applied to the laminate to form a second solid electrolyte layer. The first solid electrolyte layer was sandwiched between the first electrode and the second solid electrolyte layer.

Next, 60 mg of an In foil was put so as to come into contact with the second solid electrolyte layer, and 2 mg of a Li foil was further put so as to come into contact with the In foil to obtain a laminate. A pressure of 370 MPa was applied to the laminate to form a second electrode.

Current collectors formed of stainless steel were attached to the first electrode and the second electrode, and lead wires were then attached to the current collectors. All of the members were disposed and sealed in a desiccator, and a secondary battery of Example 1 was obtained as described above.

<Charge and Discharge Test>

As a charge and discharge tester, the following product was used.

Charge and discharge tester: TOSCAT-3100 manufactured by Toyo System Co., Ltd.

A charge and discharge test was performed at 25°C at three C rates of 0.1C, 1C, and 3C.

The discharge capacity at each C rate is as illustrated in Table 1.

Charging was performed up to 3.7 V at a current density corresponding to each C rate at a constant current and a constant voltage (CCCV charging). The current densities corresponding to the respective C rates are illustrated in Table 1.

Discharging was performed up to 1.9 V at a current density corresponding to each C rate.

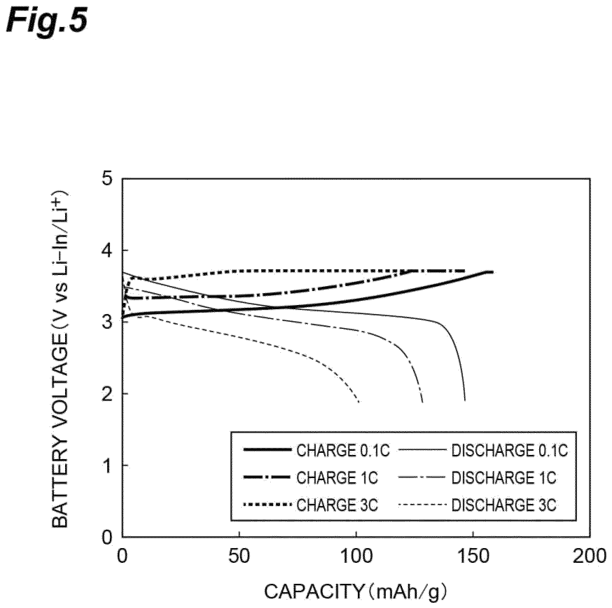

The results of the charge and discharge test of Example 1 is illustrated in FIG. 5, and the discharge capacity at each C rate of Example 1 is illustrated in Table 1.

In Example 1, a high discharge capacity was obtained at all C rates.

[Table 1]

| · Discharge capacity (unit: mAh/g) | | | |
|---|---|---|---|
| C rate (Current density) | 0.1C (0.19 mA/cm$^2$) | 1C (1.9 mA/cm$^2$) | 3C (5.8 mA/cm$^2$) |
| Example 1 | 146.3 | 128.4 | 101.2 |
| · Discharge capacity (unit: mAh/g) | | | |

[Table 2]

| | Composition | Peak half-value width (°) | Electrochemical stability evaluation (CV) | Ionic conductivity $\sigma_{25"C}$ | Activation energy $E_a$ |
|---|---|---|---|---|---|
| Example 1 | $Li_{2.15}ZrCl_4O(PO_4)_{0.05}$ | 7.22 | 0.31 V | 1.08 mS/cm | 0.296 eV |
| Example 2 | $Li_{2.15}ZrCl_4O(PO_4)_{0.05}$ | 7.23 | 0.98 V | 1.08 mS/cm | 0.289 eV |
| Example 3 | $Li_{2.1}Cl_4O(PO_4)_{0.033}$ | 5.63 | 1.10 V | 1.63 mS/cm | 0.317 eV |

(continued)

| | Composition | Peak half-value width (°) | Electrochemical stability evaluation (CV) | Ionic conductivity $\sigma_{25°C}$ | Activation energy $E_a$ |
|---|---|---|---|---|---|
| Example 4 | $Li_{2.1}ZrCl_4O(SO_4)_{0.05}$ | 5.40 | 1.05 V | 0.99 mS/cm | 0.309 eV |
| Example 5 | $Li_{2.1}Zr_{0.95}Hf_{0.05}Cl_4O(PO_4)_{0.033}$ | 8.56 | 0.35 V | 1.06 mS/cm | 0.304 eV |
| Example 6 | $Li_2Zr_{0.95}Mg_{0.05}Cl_{3.9}O(PO_4)_{0.033}$ | 5.32 | 0.56 V | 2.45 mS/cm | 0.253 eV |
| Example 7 | $Li_2Zr_{0.9}Mg_{0.1}Cl_{3.8}O(PO_4)_{0.033}$ | 5.91 | 0.71 V | 1.30 mS/cm | 0.294 eV |
| Comparative Example 1 | $Li_2ZrCl_6$ | 0.66 | 1.35 V | 0.33 mS/cm | 0.356 eV |
| Comparative Example 2 | $Li_3ZrCl_5O$ | 5.52 | - | 0.31 rnS/cm | 0.178 eV |
| Comparative Example 3 | $Li_2ZrCl_4O$ (annealed at 200°C) | 1.67 | - | 0.16 mS/cm | 0.369 eV |
| Comparative Example 4 | $Li_2ZrCl_4SO_4$ | 4.10 | - | 0.21 mS/cm | 0.444 eV |

**Claims**

1. An ion conductive substance comprising: an alkali metal element; a tetravalent metal element M; a halogen element; a dopant element X; and an oxygen element, wherein a content of the dopant element X is 50% by mol or less with respect to a content of the tetravalent metal element M, and
in an X-ray diffraction chart obtained from measurement using a CuKα radiation at 25°C, the ion conductive substance has a diffraction peak having a half-value width of 2.0° to 10° within a range of 2θ angle of 10° to 20°.

2. An ion conductive substance comprising: an amorphous phase; crystallites dispersed in the amorphous phase; an alkali metal element; a tetravalent metal element M; a halogen element; a dopant element X; and an oxygen element, wherein
an average circle equivalent diameter of the crystallites is 20 nm or less.

3. The ion conductive substance according to claim 1 or 2, wherein the dopant element is at least one of P or S.

4. The ion conductive substance according to claim 1 or 2, wherein

a content of the alkali metal element is 20% to 30% by mol,
the content of the tetravalent metal element M is 5% to 20% by mol,
a content of the halogen element is 40% to 60% by mol, and
the content of the dopant element X is 0.05% to 5% by mol, with respect to a total amount of atoms contained in the ion conductive substance.

5. An electrolyte comprising the ion conductive substance according to claim 1 or 2.

6. A battery comprising the electrolyte according to claim 5.

## Fig.1

Fig.2

Fig.3

*Fig.4*

*Fig.5*

## INTERNATIONAL SEARCH REPORT

| International application No. |
|---|
| **PCT/JP2023/032723** |

**A.    CLASSIFICATION OF SUBJECT MATTER**

*H01B 1/06*(2006.01)i; *C01B 25/45*(2006.01)i; *C01G 25/00*(2006.01)i; *H01M 10/0562*(2010.01)i
FI:    H01B1/06 A; H01M10/0562; C01G25/00; C01B25/45 H

According to International Patent Classification (IPC) or to both national classification and IPC

**B.    FIELDS SEARCHED**

Minimum documentation searched (classification system followed by classification symbols)

H01B1/06; C01B25/45; C01G25/00; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2022/009935 A1 (AGC INC.) 13 January 2022 (2022-01-13) paragraphs [0034], [0038], [0097] | 2-3, 5-6 |
| A |  | 1, 4 |
| A | JP 2014-22319 A (TOYOTA INDUSTRIES CORP) 03 February 2014 (2014-02-03) paragraphs [0107], [0140] | 1-6 |

☐ Further documents are listed in the continuation of Box C.    ☑ See patent family annex.

| *     Special categories of cited documents: | |
|---|---|
| "A"    document defining the general state of the art which is not considered to be of particular relevance | "T"    later document published after the international filing date or priority date and not in conflict with the application but cited to understand the principle or theory underlying the invention |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **08 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| | International application No. |
|---|---|
| | **PCT/JP2023/032723** |

| Patent document cited in search report | Publication date (day/month/year) | Patent family member(s) | Publication date (day/month/year) |
|---|---|---|---|
| WO 2022/009935 A1 | 13 January 2022 | US 2023/0163353 A1 paragraphs [0100], [0107], [0222] EP 4180389 A1 CN 115768721 A KR 10-2023-0035312 A | |
| JP 2014-22319 A | 03 February 2014 | (Family: none) | |

Form PCT/ISA/210 (patent family annex) (January 2015)

**EP 4 571 786 A1**

## REFERENCES CITED IN THE DESCRIPTION

**Patent documents cited in the description**

- WO 2021002064 A
- WO 2021024785 A
- WO 2021220577 A
- JP 6947321 B